Europäisches Patentamt

European Patent Office

Office européen des brevets

(11) Veröffentlichungsnummer: **0 333 893 B1**

(12) **EUROPÄISCHE PATENTSCHRIFT**

(45) Veröffentlichungstag der Patentschrift: **16.12.92**

(21) Anmeldenummer: **88104510.8**

(22) Anmeldetag: **21.03.88**

(51) Int. Cl.⁵: **E01D  19/04**

(54) **Topflager für Bauwerke, insbesondere Brückenbauwerke.**

(43) Veröffentlichungstag der Anmeldung:
**27.09.89 Patentblatt  89/39**

(45) Bekanntmachung des Hinweises auf die
Patenterteilung:
**16.12.92 Patentblatt  92/51**

(84) Benannte Vertragsstaaten:
**AT CH DE FR IT LI**

(56) Entgegenhaltungen:
**CH-A- 543 682        DE-A- 1 901 771
DE-A- 2 043 448      DE-A- 2 114 391
DE-A- 2 353 733      DE-B- 1 202 813
DE-C- 1 137 970      GB-A- 870 117
GB-A- 1 340 503      US-A- 2 749 193
US-A- 3 300 225**

(73) Patentinhaber: **Schwäbische Hüttenwerke GmbH
Wilhelmstrasse 67 Postfach 3280
W-7080 Aalen-Wasseralfingen(DE)**

(72) Erfinder: **Bayer, Karl
In der Reute 15
W-7151 Grosserlach(DE)**
Erfinder: **Beutler, Hans, Dipl.-Ing.
König-Heinrich-Strasse 2
W-8000 München 81(DE)**

(74) Vertreter: **Allgeier, Kurt
Postfach 14 27
W-7888 Rheinfelden(DE)**

Rank Xerox (UK) Business Services

## Beschreibung

Die Erfindung bezieht sich auf ein Topflager für Bauwerke, insbesondere Brückenbauwerke, bestehend aus einem Topf zur Aufnahme eines Druckkissens aus einem Elastomere auf dem ein Deckel ruht , der die Auflagerlast des Bauwerks bzw. der Brücke auf ein Fundament, Widerlager, einen Pfeiler oder dgl. überträgt, und bei welchem der Ringspalt zwischen Dekkel und Topfwandung mittels einer offenen, einteiligen kompakten Ringdichtung von rechteckigem Querschnitt verschlossen ist.

Es ist bekannt, daß das Elastomere unter der hohen Pressung im Topf von 20 bis 40 N/mm² die Neigung aufweist, sich wie eine Flüssigkeit zu verhalten, dadurch in den Ringspalt zwischen der Innenwandung des Topfes und dem Deckel einzudringen und in extremen Fällen nach oben auszutreten. Um dies zu vermeiden, ist zwischen Topf und Deckel eine umlaufende Ringdichtung eingesetzt, welche in einer in die Elastomere-Platte eingearbeiteten Ringnut aufgenommen ist und sich an die Innenwandung des Topfes anlegt.

Für diese Dichtungen verwendete man ursprünglich hartverchromte stählerne Kolbenringe und später Metallwerkstoffe, vorzugsweise Messing. Anstelle eines Ringquerschnitts von beispielsweise 6 mm Höhe und 10 mm Breite ging man auf aus mehreren übereinanderliegenden Ringen bestehenden Messing-Dichtungen über, die den Vorteil hatten, daß sich bei Kippbewegungen nicht nur eine Kante, sondern drei Kanten gegen die Topfwand abstützen, denn ein Querschnitt von 10 x 6 mm ist mehrfach torsionssteifer als dreimal der Querschnitt 10 x 2 mm. Um den Messingdichtungen eine federähn-liche Elastizität zu verleihen, hat man sie auf der Innenseite in gleichmäßigen Abständen mit Schlitzen versehen. Auch mäanderförmig abwechselnd innen und außen geschlitzte Dichtungsringe wurden verwendet. Es hat sich jedoch gezeigt, daß diese Metall-Dichtungsringe zwar das Hindurchquetschen des Rand-Ringteils der Elastomereplatte durch den Ringspalt zwischen Topfwandung und Deckel weitgehend verhindern konnten, jedoch der Nachteil von Verschleiß durch Gleiten an der Topfwandung (bis zum sog. "Fressen") und damit das Versagen der Dichtung in Kauf genommen werden mußte.

Um diese Nachteile zu vermeiden, wurden gemäß der DE-B-1202813 Dichtringe aus verschiedenen Kunststoffen, wie z. B. aus Polyamid, Acetalharz (POM) und PTFE eingesetzt, wodurch das Fressen an den Topfwandungen vermieden und die auftretende Reibung abgebaut werden konnte. Nachteilig bei diesen Dichtungen war jedoch, daß infolge des Hineinkriechens des Dichtungsmaterials in den Ringspalt zwischen Dekkel und Topfwandung sich die Dichtungen plastisch stark verformten. Außerdem war nach längerer Einsatzdauer ein Zerkrümmeln bzw. eine Pulverisierung des Dichtungsmaterials im Bereich der Wulstbildung zu beobachten, so daß die Dichtungsfunktion erheblich beeinträchtigt wurde und Elastomere-Bestandteile durch den Ringspalt kriechen konnten.

Ferner wurden auch Versuche mit einer Glasfaserverstärkung der Dichtungsringe aus PTFE durchgeführt. Diese führten zu einer Verbesserung der Standfestigkeit der Dichtungen und zu einem geringeren Anstieg der Reibungszahlen.

Die nach dem zuletzt bekannten Stand der Technik verwendeten Dichtungen für diese Aufgabe bestehen in ihrer Formgebung aus zwei oder drei übereinander geschichteten einzelnen Messing-Dichtringen mit einer Einzelquerschnitt-Dimensionierung von Höhe zu Breite von 2 oder 3 x 10 mm.

Aus diesen Gegebenheiten leitet sich die Aufgabe der Erfindung dahingehend ab, eine Ringdichtung für gattungsgemäße Topflager zu schaffen, die nicht nur günstige Gleiteigenschaften (gleichbleibend geringe Reibungszahlen gegenüber Stahl) und eine hohe Abriebfestigkeit, sondern auch gute Festigkeitswerte und zugleich eine hohe Biege- und Torsionssteifigkeit aufweist. Sie soll auch unter geringerem technischem Aufwand herstellbar sein als die bisher als am besten geeignet erkannten Ringe aus glasfaserverstärkten PTFE-Mischungen. Außerdem soll die Ringdichtung auch geeignet sein, die auf ihre Ringinnen- und unterseite einwirkenden hohen Gummipressungen von 20 bis 40 N/mm² und die daraus resultierenden Krempelbiegemomente aufzunehmen sowie auf Grund der Bemessung der Anlagefläche des Dichtringes an der Topfwandung eine möglichst gleichmäßig verteilte Kontaktpressung zwischen Ringdichtungsaußenseite und Topfwandung zu erreichen.

Ausgehend von einer bekannten gattungsgemäßen offenen, einteiligen, kompakten Ringdichtung von rechteckigem Querschnitt wird nunmehr vorgeschlagen, daß sie aus einem mit einem pulverförmigen einen Volumen-Anteil von 50 bis 100 % an pulverisierter Kohle aufweisenden Füllsubstrat gefüllten, überwiegend amorphen PTFE-Werkstoff besteht. Dabei kann der Anteil des Füllsubstrats am Gesamtvolumen der Ringdichtung zwischen 15 und 40 % liegen.

Es hat sich gezeigt, daß die erfindungsgemäße Ringdichtung die mit anderen Werkstoffen bisher erreichten niedrigen Reibungswerte noch unterschreitet, ohne dabei wie diese bisher verwendeten Werkstoffe aufgrund der hohen Kontaktpressungen zu schädlichem Verschleiß zu neigen. Aufgrund der geringen Kaltflußneigung des für die erfindungsgemäße Ringdichtung verwendeten kohleverstärkten PTFE wurde im Gegensatz zu den bisher verwendeten Dichtungswerkstoffen auch im Bereich des Ringspaltes nur eine äußerst geringe Wulstbildung beobachtet.

Weitere Merkmale der Erfindung beziehen sich auf die Ausbildungsweise der Ringdichtung. Die bisher bekannten gattungsgemäßen Ringdichtungen weisen eine rechteckige Querschnittsform auf, bei welcher die Querschnittshöhe geringer ist als die Querschnittsbreite. Dadurch ergibt sich ein ungünstiges Widerstandsmoment gegen die im Ringspalt auftretenden Scher- sowie Biegungskräfte. Wegen der höheren Steifigkeit des Dichtungswerkstoffes nach der Erfindung wurde erkannt, daß zusätzlich durch eine neuartige Dimensionierung die Standfestigkeit noch erhöht werden kann. Es wird daher vorgeschlagen, die Querschnittshöhe der Ringdichtung größer als die Querschnittsbreite zu bemessen, wobei die Maße der Querschnittshöhe zur Querschnittsbreite vorzugsweise sich wie 8 bis 12 zu 6 bis 10 verhalten.

Um eine satte Anlage der Ringdichtung an der Topfwandung zu erreichen und dadurch eine bessere Stützwirkung zu erzielen, wird ferner vorgeschlagen, daß die Ringdichtung in einem erfindungsgemäßen Verfahren unter Einhaltung eines Außendurchmesser-Übermaßes zwischen 0,5 und 2 mm gegenüber dem Topfinnendurchmesser hergestellt und in einem gegenüber der Umgebungstemperatur um wenigstens 5° C unterkühltem Zustand in den Topf eingesetzt wird.

Die wesentlichen Merkmale und Vorteile der Erfindung sind des weiteren aus der nachfolgenden Beschreibung und Erläuterung anhand des in der Zeichnung dargestellten Ausführungsbeispiels zu entnehmen.

Es zeigen

Fig. 1    ein gattungsgemäßes Lager im Teil-Querschnitt,

Fig. 2    eine Einzelheit gem. Fig. 1,

Fig. 3    die Einzelheit in der Ausführung nach der Erfindung,

Fig. 4    eine Teil-Ansicht des Dichtringes.

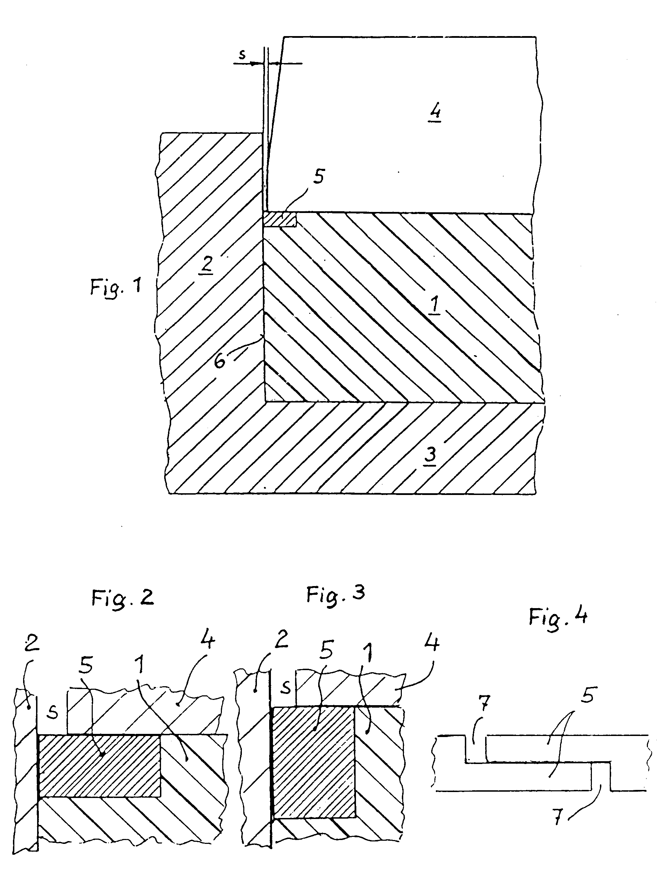

In den Fig. 1 bis 3 ist die Elastomere-Platte 1 in den Topf 2 mit Topfboden 3 eingelassen. Mit 4 ist der Deckel bezeichnet, der gegenüber der Topfwandung 6 einen Ringspalt S freiläßt, um ein Kippen zu ermöglichen. Der Ringspalt S wird durch die Ringdichtung 5 verschlossen, um ein Austreten des Elastomere zu verhindern. Wie aus Fig. 3 ersichtlich ist, kann der Querschnitt der Ringdichtung 5 vorzugsweise eine größere Höhe aufweisen, als die Breite beträgt. Das Übereinanderlappen der treppenartigen Stoßenden 7 ist aus Fig. 4 zu ersehen. Die Stoßenden können gegebenenfalls verzahnend ineinandergreifen.

## Patentansprüche

1.    Topflager für Bauwerke, insbesondere Brük-

kenbauwerke,

bestehend aus einem Topf (2) zur Aufnahme eines Druckkissens (1) aus einem Elastomere auf dem ein Deckel (4) ruht, der die Auflagerlast des Bauwerks bzw. der Brücke auf ein Fundament, Widerlager, einen Pfeiler oder dgl. überträgt, und bei welchem der Ringspalt (s) zwischen Deckel und Topfwandung mittels einer offenen, einteiligen kompakten Ringdichtung (5) von rechteckigem Querschnitt verschlossen ist,

dadurch gekennzeichnet,

daß die Ringdichtung aus einem mit einem pulverförmigen einen Volumen-Anteil von 50 bis 100 % an pulverisierter Kohle aufweisenden Füllsubstrat gefüllten, überwiegend amorphen PTFE-Werkstoff besteht.

2.    Topflager nach Anspruch 1, dadurch gekennzeichnet, daß

der Anteil des Füllsubstrats am Gesamtvolumen der Ringdichtung zwischen 15 und 40 % liegt.

3.    Topflager nach Anspruch 1, dadurch gekennzeichnet, daß

die aus einem offenen, einteiligen Ring bestehende Ringdichtung (5) sich treppenartig überlappende oder sich verzahnend ineinandergreifende Stoßenden (7) aufweist.

4.    Topflager nach Anspruch 1, dadurch gekennzeichnet, daß

die Querschnittshöhe der Ringdichtung (5) größer als die Querschnittsbreite ist.

5.    Topflager nach Anspruch 4, dadurch gekennzeichnet, daß

sich die Maße der Querschnittshöhe zur Querschnittsbreite des Ringes (5) zueinander wie 8 bis 12 zu 6 bis 10 verhalten.

6.    Verfahren zur Herstellung eines Topflagers nach einem

oder mehreren der Ansprüche 1 bis 5, dadurch gekennzeichnet, daß die Ringdichtung (5) unter Einhaltung eines Außendurchmesser-Übermaßes zwischen 0,5 und 2 mm gegenüber dem Topfinnendurchmesser hergestellt und in einem gegenüber der Umgebungstemperatur um wenigstens 5° C unterkühltem Zustand in den Topf (2) eingesetzt wird.

## Claims

1.    Pot-type structural bearing, especially for bridges, comprising a pot '2' to receive a pressure pad 'l' of elastomer on which a lid '4' has been lodged for transmitting the load of the structure or bridge onto a foundation, abutment, pier or similar constructional unit and, on which, the annular gap 's' between lid and pot wall has been closed by an open, one-part and compact annular seal '5' of rectangular cross section,
characterized in that the ring seal consists of a preponderantly amorphous PTFE material which has been filled with a powdery filling substrate showing a volume of pulverized carbon amounting to 50 to 100%.

2. Pot-type structural bearing according to claim 1,
characterized in that the portion of the filling substrate, as compared to the total volume of the ring seal, ranges between 15 and 40%.

3. Pot-type structural bearing according to claim 1,
characterized in that the annular seal '5', having the shape of an open and one-part ring, shows some stair-like overlapping or meshing joints '7'.

4. Pot-type structural bearing according to claim 1,
characterized in that the height of the cross section of the annular seal '5' is greater than the width of the cross section.

5. Pot-type structural bearing according to claim 4,
characterized in that the measurements of the cross section height of the annular seal '5' are to those of its cross section width as between 8 and 12 to between 6 and 10.

6. Method for the manufacture of a top-type structural bearing according to one or several of the claims 1 to 5,
characterized in that the annular seal '5' has been manufactured by keeping an oversize of the outside diameter between 0,5 and 2 mm, as compared to the inside diameter of the pot, and fitted into the pot '2' in an undercooled condition, viz. at least 5 centigrades lower than the ambient temperature.

**Revendications**

1. Appui du type pot pour constructions, notamment pour
ponts, comportant un pot '2' destiné à recevoir un coussin de pression '1' en élastomère, sur lequel repose un chapeau '4' qui transmettra la charge du bâtiment respectivement du pont à une fondation, à une butée, à un pilier et à des éléments de construction similaires et avec lequel, la fente annulaire 's' entre chapeau et paroi de pot a été obturée par une garniture périphérique '5' qui est ouverte, d'une seule pièce, compacte et d'une coupe transversale rectangulaire,
caractérisé par ce que la garniture périphérique consiste en une matière PTFE principalement amorphe contenant un substrat de remplissage pulvérulent qui présente une part de volume de 50 à 100% de carbone pulvérisé.

2. Appui du type pot selon revendication 1,
caractérisé par ce que la part du substrat de remplissage, par rapport au volume total de la garniture périphérique, se situe entre 15 et 40%.

3. Appui du type pot selon revendication 1,
caractérisé par ce que la garniture périphérique '5' comportant un anneau ouvert et en une seule pièce, a des joints '7' chevauchés en gradins ou s'engageant en denture.

4. Appui du type pot selon revendication 1,
caractérisé par ce que la hauteur de coupe transversale de la garniture périphérique '5' est plus grande que sa largeur de coupe transversale.

5. Appui du type pot selon revendication 4,
caractérisé par ce que les mesures de la hauteur de coupe transversale de la garniture périphérique '5' sont à sa largeur de coupe transversale comme entre 8 et 12 à entre 6 et 10.

6. Procédé pour la fabrication d'un appui du type pot selon
une seule ou plusieurs des revendications 1 à 5,
caractérisé par ce que la garniture périphérique '5' sera fabriquée tout en respectant une surmesure de diamètre extérieur entre 0,5 et 2 mm par rapport au diamètre intérieur du pot, et montée dans le pot '2' en état surrefroidi, soit au moins 5°C au-dessous de la température ambiante.

Fig. 1

Fig. 2    Fig. 3    Fig. 4